# DEMANDE DE BREVET EUROPEEN

(11) **EP 1 394 454 A1**
(43) Date de publication de la demande: **03.03.2004**
(21) Numéro de dépôt: 02078571.3
(22) Date de dépôt: 27.08.2002
(51) Int. Cl.: F16K 1/52

(54) **Robinet**

(71) Demandeur: Torrent Trading Ltd., Road Town, Tortola (VG)
(72) Inventeur: Kerger, Léon, 5613 Mondorf-les-Bains (LU); Goffin, Claude, 6761 Chenois (BE)
(74) Mandataire: Meyers, Ernest

(57) **Abrégé**

Un robinet qui est destiné au contrôle de l'écoulement d'un fluide, par exemple d'un gaz, comprend un corps de robinet (50), un organe intérieur d'ouverture et de fermeture du passage des gaz, un volant de manoeuvre (56) relié à l'organe d'ouverture et de fermeture, ainsi que des moyens limitant le mouvement de l'organe de manoeuvre (56) et de l'organe d'ouverture et de fermeture dans le sens de l'ouverture du robinet. Pour éviter un blocage du robinet dans la position ouverte, lesdits moyens limitant le mouvement de l'organe de manoeuvre sont constitués par une butée (60) et une contre-butée (62) à contact frontal, disposées respectivement sur un élément rotatif et sur le corps du robinet (50) ou vice-versa. Pour assurer un contact optimal entre la butée (60) et la contre-butée (62) celle-ci fait partie d'un élément dont la position angulaire est ajustable.

## Description

La présente invention concerne un robinet pour le contrôle de l'écoulement d'un fluide comprenant un corps de robinet, un organe intérieur d'ouverture et de fermeture du passage du fluide, un organe de manoeuvre rotatif manoeuvrable sur plusieurs tours de rotation, un moyen de liaison reliant l'organe de manoeuvre à l'organe de fermeture, des moyens limitant le mouvement de l'organe de manoeuvre et de l'organe d'ouverture et de fermeture dans le sens de l'ouverture du robinet, ces moyens étant constitués par une butée et une contre-butée disposées respectivement sur un élément rotatif et sur un élément fixe du robinet ou vice versa et dont le contact mutuel ne s'établit qu'à la fin du dernier tour de rotation de l'organe de manoeuvre lors de l'ouverture du robinet. L'invention concerne également un procédé d'assemblage d'un tel robinet.

Quoique n'y étant pas limitée, l'invention concerne plus particulièrement un robinet pour des bouteilles ou réservoirs contenant du gaz comprimé ou liquéfié. Dans ce genre de robinet, le moyen de liaison peut être une tige et les moyens de limitation du mouvement dans le sens de l'ouverture sont généralement constitués d'une ou de deux broches traversant le corps du robinet dans le sens transversal, perpendiculairement au mouvement de la tige et tangentiellement par rapport à celle-ci. A cet effet, la tige comporte, dans sa région centrale, un étranglement annulaire permettant le passage des deux broches et la rotation de la tige. Ces deux broches et la base de l'étranglement forment des butées et contre-butées définissant la fin de course de la tige et l'arrêt du mouvement d'ouverture du robinet.

L'inconvénient de ce système connu est qu'en fin de mouvement et vu que le robinet est généralement ouvert à fond, l'approche du fond de l'étranglement de la tige des deux broches est tangentielle en raison de la rotation de la tige. Par conséquent, le contact entre la tige et la ou les broche(s) est un contact à friction ou frottement, c'est-à-dire qu'il se produit un serrage progressif, voire un blocage du robinet en position d'ouverture.

Ce serrage ou blocage du robinet demande beaucoup de force manuelle au moment de la fermeture du robinet et incite à l'utilisation d'un outil, tel qu'une pince. Ceci peut toutefois être à l'origine d'imprudences et a déjà occasionné des accidents au moment de la fermeture du robinet. Ainsi lorsque le robinet est bloqué de cette manière il arrive que l'opérateur ne sache pas si le robinet est ouvert ou fermé et il est déjà arrivé qu'un opérateur, en voulant desserrer le robinet avec un outil, a tourné l'organe de manoeuvre dans le mauvais sens, c'est-à-dire dans le sens de l'ouverture, jusqu'à la rupture de la tête du robinet. Ceci peut évidemment constituer un grave danger si les gaz sont nocifs ou explosifs.

Pour éviter un tel blocage le document EP 1 124 081 A1 propose un robinet du genre décrit dans le préambule. Dans ce robinet il n'y a pas de contact à frottement entre la butée et la contre-butée et il n'y a donc aucun risque de serrage ou de blocage du robinet. L'opérateur peut facilement fermer le robinet sans déploiement d'une force excessive et sans risque de se tromper de sens de rotation et de serrer davantage le robinet.

Lors de l'ouverture et à l'avant-dernier tour de rotation de l'organe de manoeuvre, la butée et la contre-butée n'entrent pas encore en contact, ce qui signifie que, lorsqu'elles arrêtent la rotation de l'organe de manoeuvre, elles sont en contact mutuel sur une hauteur qui est inférieure au pas de vis des filetages entre les éléments rotatifs et le corps du robinet.

Toutefois un robinet tel que décrit dans le document précité ne fonctionne de manière fiable que lorsque la butée et la contre-butée se contactent par une grande partie de leurs surfaces mutuelles c'est-à-dire sur la majeure partie de leur longueur axiale. Si par exemple, la butée et la contre-butée sont, à l'avant-dernier passage de la butée en regard de la contre-butée, séparées encore d'une distance axiale qui est à peine inférieure à celle du pas de vis qui assure le déplacement axial de la butée mobile, les deux butées entreront en contact mutuel seulement par leurs bords axiaux respectifs pour arrêter la manoeuvre. Or ceci peut, à la longue, occasionner une usure de leur bord de contact et finalement aboutir à un contact frictionnel pour se retrouver dans la situation problématique décrite plus haut.

Ce risque est donc tributaire des paramètres qui sont déterminants pour la surface de contact entre la butée et la contre-butée. Il s'agit, en l'occurrence, du pas de vis qui assure le déplacement axial de la butée mobile, des positions angulaires respectives de la butée mobile et de la contre-butée ainsi que de la manière d'assemblage.

Le but de la présente invention est par conséquent de prévoir un robinet du genre décrit dans le préambule ainsi qu'un procédé d'assemblage de ce robinet de manière à garantir un bon contact entre la butée et la contre-butée et assurer ainsi un fonctionnement efficace du robinet.

Pour atteindre ce but, l'invention prévoit un robinet du genre décrit dans le préambule qui est caractérisé en ce que la contre-butée fait partie d'un élément séparé indépendant du corps du robinet et que des moyens sont prévus pour fixer ledit élément dans le corps du robinet dans une position axiale et une position angulaire déterminées correspondant à un contact maximal avec la butée mobile en position ouverte du robinet.

La butée mobile peut être formée par une patte radiale s'étendant du moyen de liaison.

La butée fixe peut être formée par une rampe annulaire à pente axiale faisant partie d'une rondelle engagée entre le corps du robinet et le moyen de liaison.

Les moyens pour fixer ladite rondelle dans une position axiale et angulaire déterminées sont, de préférence, constituées par un épaulement radial prévu dans le corps du robinet et coopérant avec la zone annulaire périphérique de la rondelle autour de la rampe formant la contre-butée ainsi que par une douille cylindrique pourvue d'un filetage intérieur visée sur un filetage correspondant du moyen de liaison et d'un filetage extérieur vissé dans un filetage intérieur correspondant du corps du robinet, la fixation axiale et radiale de la rondelle étant assurée par le blocage de celle-ci sur l'épaulement du corps du robinet lors du vissage de la douille dans le corps du robinet.

Pour améliorer la fixation de la position angulaire de la rondelle, la surface annulaire périphérique de celle-ci qui est engagé sur l'épaulement radial du corps du robinet peut comporter des rugosités superficielles. Il est également possible de prévoir entre la rondelle et son épaulement un joint torique écrasable.

Le procédé d'assemblage d'un robinet tel que défini ci-dessus consiste
- à connecter l'extrémité du moyen de liaison à l'organe d'ouverture et de fermeture du robinet si ce moyen et cet organe sont des éléments séparés ;
- à enfiler, par l'extrémité opposée, du moyen de liaison l'élément comportant la contre-butée ;
- à positionner angulairement le moyen de liaison et ledit élément de manière à ce que la butée et la contre-butée soient en contact mutuel ;
- à engager le moyen de liaison avec ledit élément dans le corps du robinet dans une position axiale correspondant à l'ouverture du robinet ;
- à fixer ledit élément dans cette position axiale et angulaire.

Ainsi on est toujours assuré que, quel que soit le pas de vis qui assure le déplacement de la butée mobile, la butée fixe se trouve toujours dans une position angulaire qui correspond à un contact maximal entre la butée et la contre-butée. La seule condition est que la longueur axiale prévue pour le contact entre la butée et la contre-butée soit légèrement inférieure au pas de vis afin qu'elles puissent se croiser sans heurt à l'avant-dernier tour d'ouverture du robinet.

D'autres particularités et caractéristiques de l'invention ressortiront, de la description détaillée d'un mode de réalisation avantageux présente ci-dessous, à titre d'illustration, en référence aux dessins annexés dans lesquels :
La figure 1 est une vue partiellement en coupe d'une partie d'un robinet selon la présente invention.
La figure 2 montre le robinet de la figure 1 en vue éclatée partielle.
La figure 3 montre une vue en coupe du robinet dans la phase d'ouverture correspondant à l'avant-dernier tour du volant de manoeuvre.
La figure 4 montre une vue analogue à celle de la figure 3 en position complètement ouverte.

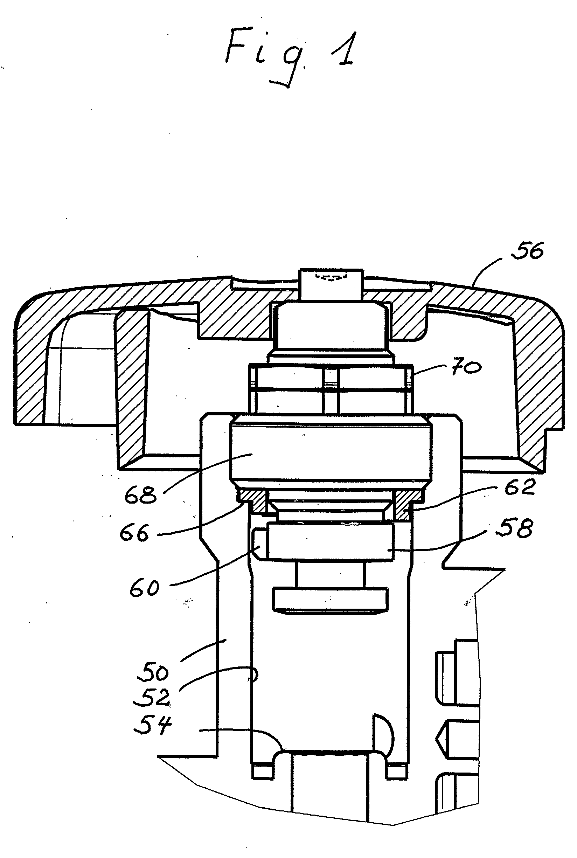

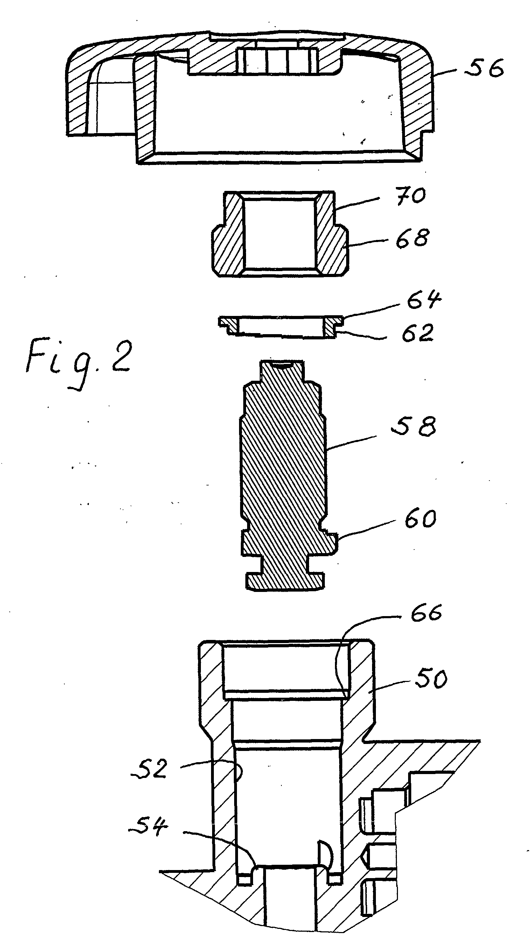

On va d'abord se référer simultanément aux figures 1 et 2 sur lesquelles on n'a représenté que les éléments nécessaires à la compréhension de l'invention. Le robinet comporte un corps de robinet 50, de préférence en métal, par exemple en bronze et qui est traversé axialement par un alésage cylindrique 52 dans lequel se trouve un siège 54 à l'intersection d'un raccord d'admission et d'un raccord de sortie de fluide par exemple de gaz.

Le robinet est actionné par un volant de manoeuvre 56 qui est fixé par exemple à l'aide d'une vis ou de toute autre manière sur une tige de liaison 58 qui est vissée dans la partie supérieure du corps 50. Du côté opposé au volant 56 la tige 58 est reliée directement ou indirectement à un organe d'ouverture ou de fermeture, non montré, qui coopère avec le siège 54 pour libérer ou fermer le passage du gaz. L'organe d'ouverture et de fermeture pourrait aussi constituer la partie inférieure de la tige quoique ce soit préférable d'avoir un organe d'ouverture et de fermeture séparé qui ne tourne pas avec la tige de liaison 58.

Une rotation du volant de manoeuvre 56 engendre par conséquent une translation axiale de la tige 58 et de l'organe d'ouverture et de fermeture dans l'alésage 52 du corps 50 du robinet.

Le robinet comporte comme dans le document EP 1 124 081 A1 une butée mobile et une contre-butée fixe pour déterminer la position d'ouverture du robinet. La butée mobile représentée en 60 se trouve sur la partie inférieure de la tige 58 et, dans le mode de réalisation représenté, se présente sous forme d'une patte qui s'étend radialement de la tige 58.

Contrairement au document précité la contre-butée fixe, montrée en 62, ne fait pas partie du corps 50 du robinet, mais d'un élément séparé, en l'occurrence d'une rondelle 64 entourant la tige de liaison 58 et reposant sur un épaulement radial intérieur 66 de l'alésage 52. Dans l'exemple représenté la contre-butée se présente sous forme d'une rampe annulaire à pente axiale qui s'étend en spirale de la partie intérieure de la rondelle 64 et dont le gradin axial forme la butée proprement dite qui coopère avec la butée mobile. La contre-butée pourrait également être constituée d'une simple patte s'étendant axialement de la rondelle.

La rondelle 64 est fixée et coincée sur son siège ou épaulement 66 à l'aide d'une douille cylindrique annulaire 68. Celle-ci comporte un filetage intérieur destiné à être vissé sur un filetage extérieur correspondant de la tige 58. La douille 58 comporte également un filetage extérieur destiné à être vissé dans un filetage intérieur correspondant prévu dans l'alésage 52 au-dessus de l'épaulement 66. La douille 68 comporte finalement une tête polygonale 70 pour être facilement serré à l'aide dune clef.

En vue de l'assemblage du robinet la rondelle 64 telle que vue sur la figure 2 est engagée par le dessus autour de la tige 58. La partie supérieure de la tige est alors engagée par le dessous dans la douille 68 et vissée à fond dans celle-ci. Ce vissage de la tige 58 dans la douille 68 correspond au scénario d'ouverture du robinet. Ce vissage de la tige 68 amène automatiquement la butée 60 au contact de la contre-butée 62 lorsque la tige est vissée à fond. L'ensemble ainsi constitué comprenant le tube 58, la rondelle 64 et la douille 68 est ensuite engagé dans le corps 50 et y est vissé grâce au filetage extérieur de la douille 68 jusqu'à ce que la rondelle 64 soit coincée entre l'épaulement 66 et le bord inférieur de la douille 68.

Pendant le vissage le contact mutuel entre la butée 60 et la contre-butée 62 reste préservé. Si un écart s'est produit pendant la manipulation celui-ci est à nouveau annulé automatiquement par friction entre le moment du premier contact de la rondelle 64 avec l'épaulement 66 et la fin du serrage.

Pour améliorer le positionnement angulaire de la rondelle il est avantageux de prévoir sous son bord extérieur d'assise sur l'épaulement 66 des rugosités ou un point torique ou annulaire écrasable. On est aussi certain que la contre-butée 62 est coincée dans une position axiale et angulaire qui correspond à un contact maximal avec la butée mobile 60 en position d'ouverture du robinet.

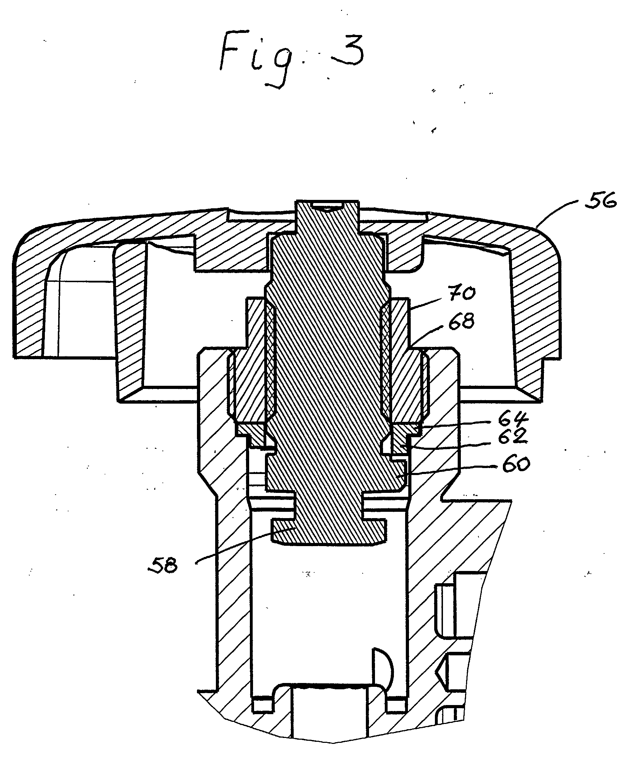

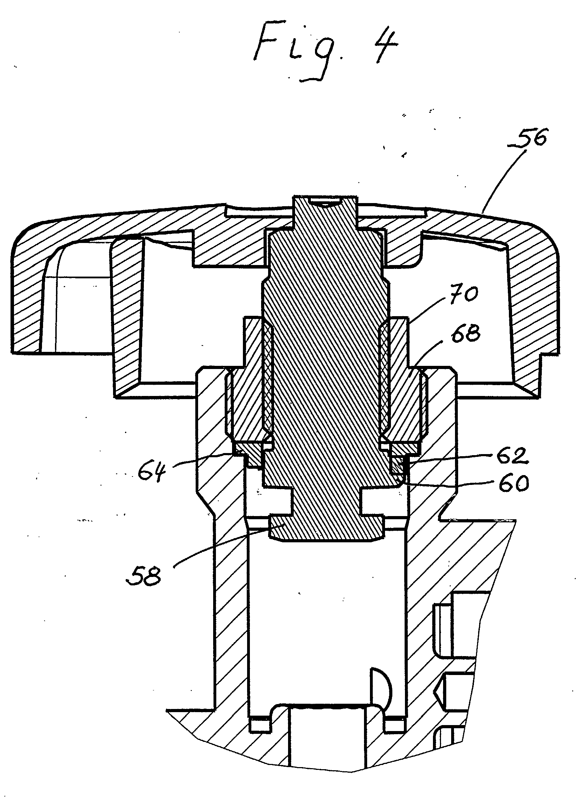

Les figures 3 et 4 montrent le robinet en phase finale de sa manoeuvre d'ouverture. Sur la figure 3 le robinet se trouve à la fin de l'avant-dernier tour de rotation du volant de manoeuvre 56 au moment où la butée mobile 60 de la tige 58 croise la contre-butée fixe 62. On voit qu'elle en est encore séparée d'une distance axiale suffisante pour la croiser sans heurt.

En revanche, à la fin du tour suivant, dont la position est représentée sur la figure 4 le tube a subi un déplacement axial correspondant au pas de vis du filetage extérieur de la tige 58 ce qui termine la manoeuvre d'ouverture par un contact mutuel entre la butée 60 et la contre-butée 62 sur une surface relativement importante de celle-ci.

La douille 68 utilisée dans le mode de réalisation représenté pour assurer la fixation axiale et angulaire de la rondelle 64 et de la contre-butée 62 n'est qu'un exemple avantageux qui peut être remplacé par d'autres moyens de fixation. L'essentiel est de pouvoir assembler la tige avec la contre-butée en position de contact avec la butée mobile et de pouvoir fixer la contre-butée dans la position angulaire d'ouverture du robinet.

Quoique le mode de réalisation décrit ci-dessus soit le mode de réalisation préféré, il est possible de prévoir la rondelle avec la contre-butée à l'extérieur du corps de robinet de manière à coopérer avec une butée prévue sur la jupe périphérique du volant de manoeuvre. La contre-butée pourrait alors être constituée par une patte qui s'étend radialement de la rondelle. Cette rondelle serait alors coincée entre le bord supérieur du corps 50 du robinet et un épaulement radial sortant se trouvant immédiatement en-dessous de la tête 70 de la douille 68. La mise en place consisterait alors à engager la rondelle par en-dessous sur la tige 58 et la douille 68, à introduire celle-ci par le dessus dans le corps 50 du robinet, à visser la douille 68 dans le corps 50 jusqu'à ce que son épaulement radial soit axialement en contact avec la rondelle mais sans que celle-ci ne soit coincée, à tourner le volant 56 dans la position d'ouverture, à tourner la rondelle jusqu'à ce que sa contre-butée soit en contact optimal avec la butée sur le volant 56 et à fixer la rondelle dans cette position angulaire en serrant à fond la douille 68 dans le corps 50 du robinet.

L'invention n'est pas non plus limitée à un robinet à gaz mais convient pour toutes sortes de robinet pour fluides ou liquides.

## Revendications

1. Robinet pour le contrôle de l'écoulement d'un fluide comprenant un corps (50) de robinet, un organe intérieur d'ouverture et de fermeture du passage du fluide, un organe de manoeuvre rotatif (56) manoeuvrable sur plusieurs tours de rotation, un moyen de liaison (58) reliant l'organe de manoeuvre (56) à l'organe de fermeture, des moyens limitant le mouvement de l'organe de manoeuvre et de l'organe d'ouverture et de fermeture dans le sens de l'ouverture du robinet ces moyens étant constitués par une butée (60) et une contre-butée (62) disposées respectivement sur un élément rotatif et sur un élément fixe du robinet ou vice versa et dont le contact mutuel ne s'établit qu'à la fin du dernier tour de rotation de l'organe de manoeuvre (56) lors de l'ouverture du robinet, **caractérisé en ce que** la contre-butée (62) fait partie d'un élément séparé (64) indépendant du corps (50) du robinet et que des moyens sont prévus pour fixer ledit élément (64) dans le corps du robinet dans une position axiale et une position angulaire déterminées correspondant à un contact maximal avec la butée mobile (60) en position ouverte du robinet.

2. Robinet selon la revendication 1, **caractérisé en ce que** la butée mobile (60) est formée par une patte radiale s'étendant du moyen de liaison (58.

3. Robinet selon la revendication 1, **caractérisé en ce que** la butée fixe (62) est formée par une rampe annulaire à pente axiale faisant partie d'une rondelle (64) engagée entre le corps (50) du robinet et le moyen de liaison (58).

4. Robinet selon la revendication 3, **caractérisé en ce que** les moyens pour fixer ladite rondelle (64) dans une position axiale et angulaire déterminées sont constituées par un épaulement radial (66) prévu dans le corps (50) du robinet et coopérant avec la zone annulaire périphérique de la rondelle (64) autour de la rampe formant la contre-butée (62) ainsi que par une douille cylindrique annulaire (68) pourvu d'un filetage intérieur visé sur un filetage correspondant du moyen de liaison (58) et d'un filetage extérieur vissé dans un filetage intérieur correspondant du corps (50) du robinet, la fixation axiale et radiale de la rondelle (64) étant assurée par le blocage de celle-ci sur l'épaulement (66) du corps du robinet lors du vissage de la douille (68) dans le corps (50) du robinet.

5. Robinet selon l'une des revendications 4 ou 5 **caractérisé en ce que** la surface annulaire périphérique de la rondelle (64) qui est engagé sur l'épaulement radial (66) du corps (50) du robinet comporte des rugosités superficielles.

6. Procédé d'assemblage d'un robinet selon l'une quelconque des revendications 1 à 5 **caractérisé par** les étapes suivantes :
- connecter l'extrémité du moyen de liaison (58) à l'organe d'ouverture et de fermeture du robinet si ce moyen et cet organe sont des éléments séparés ;
- enfiler, par l'extrémité opposée, du moyen de liaison (58), l'élément (64) comportant la contre-butée (62);
- positionner angulairement le moyen de liaison et ledit élément de
- manière à ce que la butée (60) et la contre-butée (62) soient en contact mutuel ;
- engager le moyen de liaison (58) avec ledit élément (64) dans le
- corps (50) du robinet dans une position axiale correspondant à l'ouverture du robinet ;
- fixer ledit élément (64) dans cette position axiale et angulaire.
